# EUROPEAN PATENT APPLICATION

(11) **EP 4 641 344 A1**
(43) Date of publication of application: **29.10.2025**
(21) Application number: 24275042.0
(22) Date of filing: 23.04.2024
(51) Int. Cl.: G05D 1/697

(54) **AUTONOMOUS VEHICLE CONTROL**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method of controlling an autonomous vehicle D. The method comprises: determining a route plan for an autonomous vehicle according to a set task for the autonomous vehicle; operating the autonomous vehicle according to the route plan; determining a rendezvous point and operating the autonomous vehicle to go to the rendezvous point; and on reaching the rendezvous point determining, by the autonomous vehicle, whether a rendezvous condition is met, and if the rendezvous condition is not met determining, by the autonomous vehicle, a subsequent rendezvous point and operating the autonomous vehicle to go to the subsequent rendezvous point.

## Description

### FIELD

The present invention relates to methods for control of autonomous vehicles, and to such vehicles.

### BACKGROUND

Autonomous vehicles, i.e., those which can operate with reduced or no direct human involvement are increasingly prevalent. Once an autonomous vehicle has been set a task, such as to travel from a control station to a particular location and back, it may still be desirable to monitor, in real time, the position and/or operational status of the autonomous vehicle to determine whether the autonomous vehicle is progressing in a way that will enable it to accomplish the task. For example, an autonomous vehicle may report location and/or operational status information to a control station using a radio or other communication protocol. Furthermore, if a two-way communication protocol has been established, the control station may provide commands back to the autonomous vehicle if the autonomous vehicle has reacted in a seemingly erroneous manner in performing the task, or the control station may provide the autonomous vehicle with updated commands for other tasks.

In the scenarios outlined above, even though the autonomous vehicle has the capability to operate without ongoing human involvement, problems may arise if communication between the control station and the autonomous vehicle is unavailable, for environmental or other reasons. Similar problems occur when autonomous vehicles are used cooperatively in accomplishing a set task, and communication between individual autonomous vehicles is unavailable.

### SUMMARY

According to an aspect of the present invention, there is provided a method of controlling an autonomous vehicle, the method comprising: determining a route plan for an autonomous vehicle according to a set task for the autonomous vehicle; operating the autonomous vehicle according to the route plan; determining a rendezvous point and operating the autonomous vehicle to go to the rendezvous point; and on reaching the rendezvous point determining, by the autonomous vehicle, whether a rendezvous condition is met, and if the rendezvous condition is not met determining, by the autonomous vehicle, a subsequent rendezvous point and operating the autonomous vehicle to go to the subsequent rendezvous point. In one example, the route plan includes information that specifies the rendezvous point. In one example, determining the rendezvous is performed by the autonomous vehicle itself. In one example, the determining the rendezvous is checking and confirm the location of the rendezvous point in the route plan. In one example, the determining the rendezvous point is a calculation performed by the autonomous vehicle.

In this way, even if the autonomous vehicle diverts from the route plan while performing the set task, such as if an unanticipated obstacle is encountered on the route plan or there is a delay in being able to perform the set task based on external conditions, or for other reasons the autonomous vehicle is not able to get to the rendezvous point as planned, the autonomous vehicle may still be able to make a rendezvous at the subsequent rendezvous point without needing to communicate with a control station.

In one example, the method further comprises, on reaching the subsequent rendezvous point, determining whether the rendezvous condition is met, and if the rendezvous condition is not met operating the autonomous vehicle to conduct a search for a further rendezvous point. In one example, the method further comprises, on reach the subsequent rendezvous point, determining, by the autonomous vehicle, whether the rendezvous condition is met. Even if the attempt to meet at the subsequent rendezvous is also unsuccessful, again the autonomous vehicle is able to recover and make to a further rendezvous point without needing to communicate with a control station.

In one example, the method further comprises operating the autonomous vehicle to conduct a search for a further rendezvous point is performed according to a random search algorithm. This is a suitable strategy when there are wide bounds for the location of a possible rendezvous at a further rendezvous point. Various random search, or other search algorithms are available in the literature, with a suitable random search algorithm employed, according to the type of autonomous vehicle and the nature of the route plan or set task.

In one example, the step of operating the autonomous vehicle to conduct a search for a further rendezvous point is performed according to one or more of: a last known location of a control station, the time elapsed since the control station was known to be at its last known location, and the operating parameters of the control station. Relevant operating parameters of the control station include service speed, operational range or ceiling, or dimensional parameters which govern areas which the control station cannot access. In one example, bounds for the possible location of the control station with which the autonomous vehicle is to rendezvous, i.e., the extent of the possible search area can be set this way.

In one example, the method comprises determining a route plan from the control station and back to the control station to enable the autonomous vehicle to rendezvous therewith.

In one example, the step of operating the autonomous vehicle to conduct a search for a further rendezvous point is performed until it is determined that a rendezvous condition is met. In one example, the rendezvous condition is determined as being met when the autonomous vehicle has rendezvoused with a control station. In one example, the rendezvous condition is based on a passive confirmation of the identity of the control station. In one example, the rendezvous condition is based on the autonomous vehicle docking with the control station, mounting on or to the control station, or coming inside or aboard the control station. In one example, the rendezvous condition is determined as being met without broadcast communication, for example without radio communication. In one example, the rendezvous condition is determined as being met when the autonomous vehicle approaches within a predetermined distance of the control station. In one example, the rendezvous condition is determined as being met according to a handshake operation performed between the autonomous vehicle and the control station, e.g., in a line of sight, passive, closed or non-broadcast communication protocol.

In one example, the method comprises providing the autonomous vehicle with a predetermined movement plan of a control station. In one example, the step of determining the rendezvous point is performed according to a predetermined movement plan of a control station. In one example, the rendezvous point, and any determined subsequent rendezvous point or points are determined on the predetermined movement plan of the control station. In one example, the method comprises determining one or more subsequent rendezvous points on the predetermined movement plan of the control station, and going to them until the autonomous vehicle has gone to the end of the predetermined movement plan. In one example, the method comprises determining subsequent rendezvous points on the predetermined movement plan of the control station, and going to them until the autonomous vehicle has no more options for rendezvous points on the route plan, then starting to search for a further rendezvous point.

That is, by considering the planned movements of the control station, the autonomous vehicle is able to determine a suitable rendezvous point to meet up with the control station after the route plan has been followed, and/or after the set task has been accomplished.

In one example, the step of determining the subsequent rendezvous point is performed according to a predetermined movement plan of a control station. In this way, should the autonomous vehicle have taken longer than planned to accomplish the set task, or for any other reason not been able to get to the rendezvous point as planned, such as encountering obstacles or other unexpected impediments such as reduction in its own capacity such as from a breakdown, it is able to adapt and, track the control station to a potential subsequent rendezvous point by following the predetermined movement plan of the control station. In one example, the method comprises determining the most direct route for the autonomous vehicle to intersect the predetermined movement plan of the control station according to the predetermined movement plan of the control station, in terms of shortest distance, shortest time, lowest fuel, or lowest overall energy expenditure. In one example, the method comprises determining the most direct route for the autonomous vehicle to intersect the control station according to the predetermined movement plan of the control station, in terms of shortest distance, shortest time, lowest fuel, or lowest overall energy expenditure.

In one example, the step of determining the subsequent rendezvous point and operating the autonomous vehicle to go to the subsequent rendezvous point comprises determining, according to a predetermined movement plan of the control station, one or more rendezvous point candidates between the current location of the autonomous vehicle and the subsequent rendezvous point and operating the autonomous vehicle to go to the subsequent rendezvous point via the rendezvous point candidates.

In one example, the rendezvous point candidates are points on the predetermined movement plan of the control station.

In one example, the step of determining the subsequent rendezvous point and operating the autonomous vehicle to go to the subsequent rendezvous point is performed until the autonomous vehicle has no more information on the predetermined movement plan of the control station.

In one example, the step of determining the rendezvous point is performed only after the set task has been completed by the autonomous vehicle. In this way, the time taken to complete the set task is not of concern in determining the rendezvous point, and the autonomous vehicle is able to determine the best way to reach a rendezvous point considering its current location, and the of potential rendezvous point options available at that time.

In one example, the step of determining the rendezvous point is performed as part of determining the route plan for the autonomous vehicle. This approach gives the automatic vehicle a best-case scenario to aim for if there are no obstacles or operational issues. In one example, the method comprises providing the autonomous vehicle with a predetermined movement plan of the control station.

In one example, the rendezvous condition is determined as being met when the autonomous vehicle has rendezvoused with another autonomous vehicle, such as another autonomous vehicle operating according to a shared set task, or two or more other autonomous vehicles operating according to a shared set task. In such examples, the presence of a plurality of autonomous vehicles may facilitate completion of the set task, as the autonomous vehicles can work together to that end. In one example, the method is performed by a plurality of autonomous vehicles arranged to operate together, for example in a swarm. In one example, the rendezvous condition is determined as being met when the autonomous vehicle has rendezvoused with another autonomous vehicle, or all other autonomous vehicles of the swarm. Thus, should one of the autonomous vehicles become separated from the others, such as through encountering unexpected obstacles or operational issues, the autonomous vehicles are able to come back together according to the method described.

As has been described, the method may further comprise operating the autonomous vehicle to deviate from the determined route plan in case of an obstacle encountered on the route plan. In one example, the method further comprises determining a route plan that involves an indeterminate operational delay to account for a period of time that will be needed to undertake the set task. In both such scenarios a later rendezvous is facilitated.

According to an aspect of the present invention, there is provided an autonomous vehicle configured to perform a method as described herein.

In one example, the autonomous vehicle comprises a land vehicle. In one example, the autonomous vehicle comprises a watercraft. In one example, the control station comprises an aircraft. In one example, the autonomous vehicle comprises a drone.

According to an aspect of the present invention, there is provided a control station arranged to carry an autonomous vehicle configured to perform a method as described herein. In one example, the control station is arranged to carry a plurality of autonomous vehicles as described herein.

In one example, the control station comprises a platform for autonomous vehicles. In one example, the control station comprises a vehicle. In one example, the control station comprises a land vehicle. In one example, the control station comprises a watercraft such as a ship or other vessel. In one example, the control station comprises an aircraft. In one example, the control station is arranged to carry the autonomous vehicle. In one example, the control station is arranged to carry a plurality of the autonomous vehicles.

According to an aspect of the present invention, there is provided a system comprising a control station and an autonomous vehicle as described here. In one example, the system comprises a plurality of autonomous vehicles as described herein. In one example, the autonomous vehicle has a higher top speed than the control station.

According to an aspect of the present invention there is provided a computer readable medium comprising instructions which, when executed by a computer of an autonomous vehicle cause the autonomous vehicle to perform a method as described herein.

Other features of the invention will be apparent from the claims, and the description which follows.

### BRIEF DESCRIPTION OF THE FIGURES

Embodiments of the invention will now be described by way of example only with reference to the figures, in which:
Figures 1 and 2 show steps in methods of controlling an autonomous vehicle;
Figure 3 shows steps in a method of controlling a control station;
Figure 4 shows a schematic of a system including autonomous vehicles operating with a control station, according to the method of Figure 1;
Figure 5 shows a schematic of a system including autonomous vehicles operating with a control station, according to the methods of Figure 1 and 2; and
Figure 6 shows an example computer readable medium.

### DETAILED DESCRIPTION

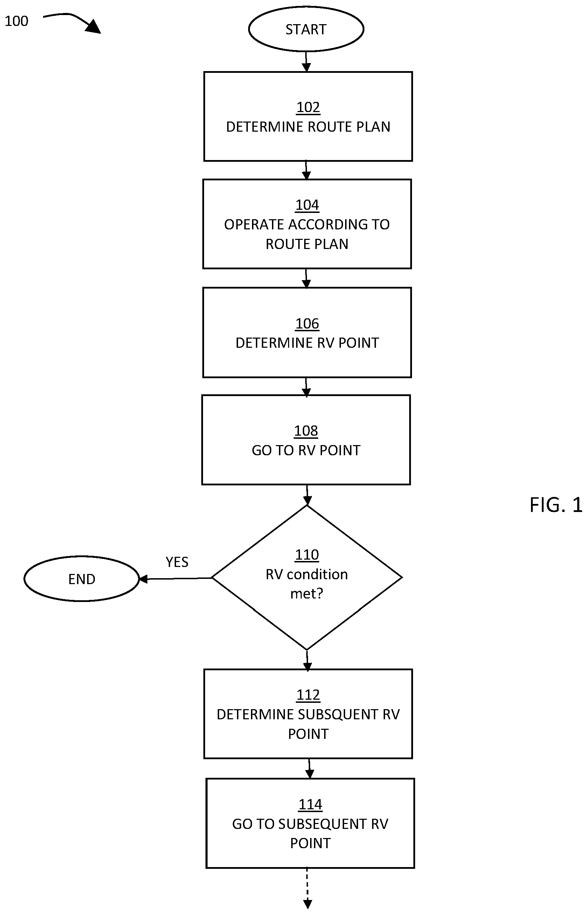

Figure 1 shows, schematically, steps in a control method 100 for an autonomous vehicle. At step 102 a route plan for the autonomous vehicle is determined. The route plan is determined according to a set task for the autonomous vehicle, when deployed and allowed to operate autonomously. For example, the set task may be to transport something to a particular location, or to travel to a particular location to take photographs or make other observations. The route plan may be determined by the autonomous vehicle itself, using onboard processing capacity, or may be determined by a control station and transferred to the autonomous vehicle before the autonomous vehicle is deployed. The route plan is suitably determined according to the set task and locations relevant to that, as well as with reference to mapping data and the current location of the autonomous vehicle. After the route plan has been determined, the autonomous vehicle is deployed and at step 104 operates according to the route plan so that the set task may can be completed. In the method shown, no communication is needed between the autonomous vehicle and any control station after the autonomous vehicle is deployed, as the further steps in the control method are designed to enable the autonomous vehicle to complete the set task autonomously then make to a rendezvous point. As will be appreciated, operating, determining, deploying, controlling and other actions performed by, or described with reference to the autonomous vehicle, after its deployment and before a rendezvous condition is met, are actions performed autonomously, by processors, control units, and drive systems an onboard the autonomous vehicle.

At step 106 the autonomous vehicle determines a rendezvous point, and at step 108 the autonomous vehicle goes to the rendezvous point. Determining the rendezvous point may involve the autonomous vehicle calculating, dynamically a rendezvous point, or may involve checking for a predetermined rendezvous point included as part of the previously determined route plan. On reaching the rendezvous point the autonomous vehicle determines at step 110 whether a rendezvous condition is met. If the rendezvous condition is met the method ends. However, if the rendezvous condition is not met the autonomous vehicle determines a subsequent rendezvous point at step 112 and operates itself to go to the subsequent rendezvous point at step 114.

Using the described method, even if the autonomous vehicle diverts itself from the route plan while autonomously performing the set task, such as if an unanticipated obstacle is encountered on the route plan or there is a delay in being able to perform the set task based on indeterminate external conditions, or for other reasons the autonomous vehicle is not able to get to the rendezvous point as planned, the autonomous vehicle may still be able to make a rendezvous at the subsequent rendezvous point. The method does not require the autonomous vehicle to make any transmissions, or to receive updated command and control information from a control station or similar.

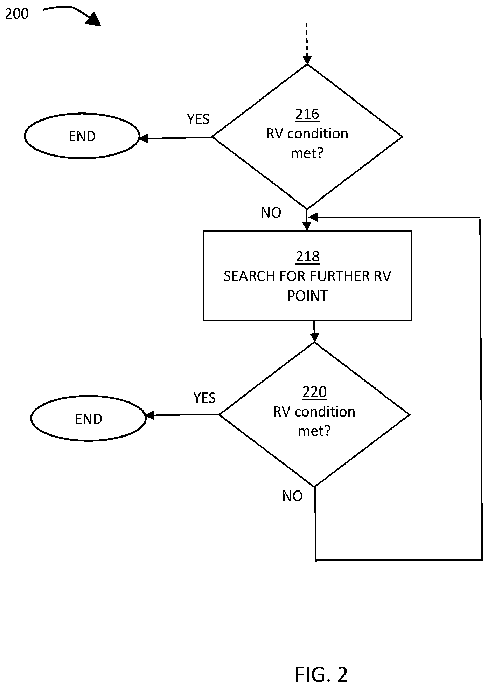

Figure 2 shows further steps of a method 200, that are performed when the autonomous vehicle gets to the subsequent rendezvous point. On reaching the subsequent rendezvous point the autonomous vehicle at step 216, the autonomous vehicle determines for itself whether the rendezvous condition is met. If the rendezvous condition is met, the method ends. However, if the rendezvous condition is not met, at step 218 the autonomous vehicle operates itself to conduct a search for a further rendezvous point. In the event that the subsequent rendezvous in also unsuccessful, again the autonomous vehicle is able to recover, and search for a further rendezvous point without needing to communicate with a control station. In the method of Figure 2, the search for a further rendezvous point is performed on an ongoing basis 218, 220 until the rendezvous condition is met.

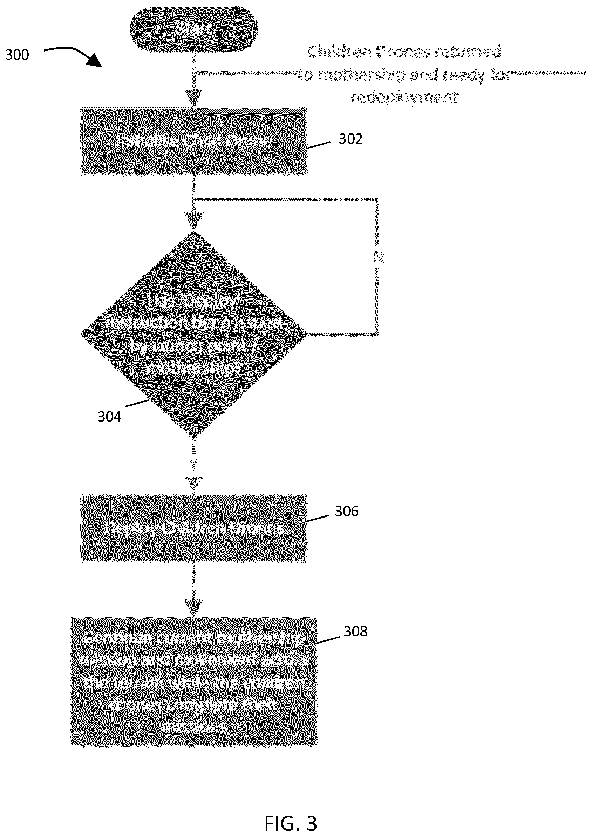

Figure 3 shows schematically steps in a method 300, in operation of a control station with a plurality of autonomous vehicles configured to operate as described herein. In this example the autonomous vehicles are referred to as "children drones", and the control station referred to as "the mothership". In a typical use scenario, the mothership may be a large, slower moving carrier vehicle, and the children drones relatively smaller and faster autonomous vehicles that can be deployed from the mothership to undertake a set task, then return to the mothership for subsequent redeployment on other set tasks.

With each of the child drones ready for deployment/redeployment from the mothership, the child drones are each initialised at step 302. This involves determining with a route plan according to the set task and preparing other operational aspects such as providing fuel/battery charge, a payload for delivery, setting camera or other sensor configuration options and the like.

At an appropriate point, the mothership issues an instruction for the deployment of the children drones as step 304, which then deploy and set out according to the route plan, operating autonomously at step 306.

The children drones may operate fully independently, including independently of each other, or may operate according to a shared set task according to their respective individual capabilities and applicable swarming abilities. From the point of deployment, the mothership is not in communication with the child drones. The mothership is then able to continue with its own mission at step 308, moving across the terrain while the children drones operate autonomously and without command-and-control instructions being passed in either direction. This makes the operation resilient not only to changes in route plan or other disturbances to the operations of the children drones, but also means that changes to the predetermined route of the mothership do not leave the children drones stranded and with no means for re-finding and rendezvousing with the mothership.

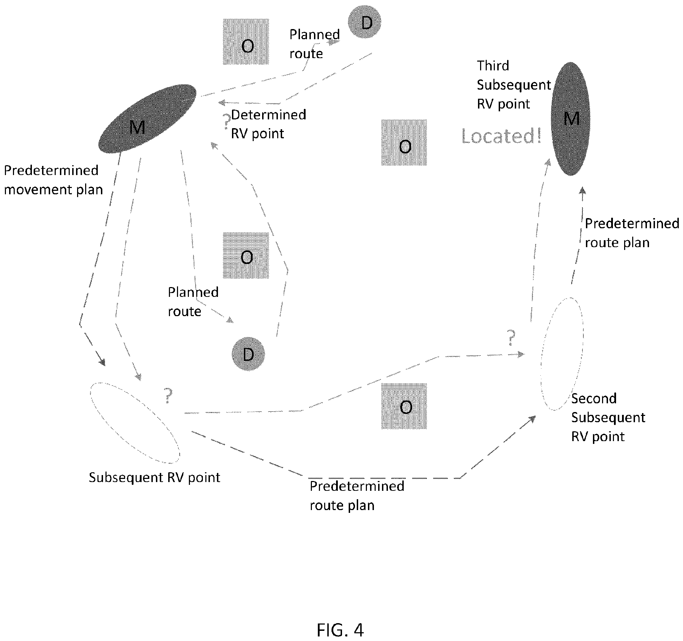

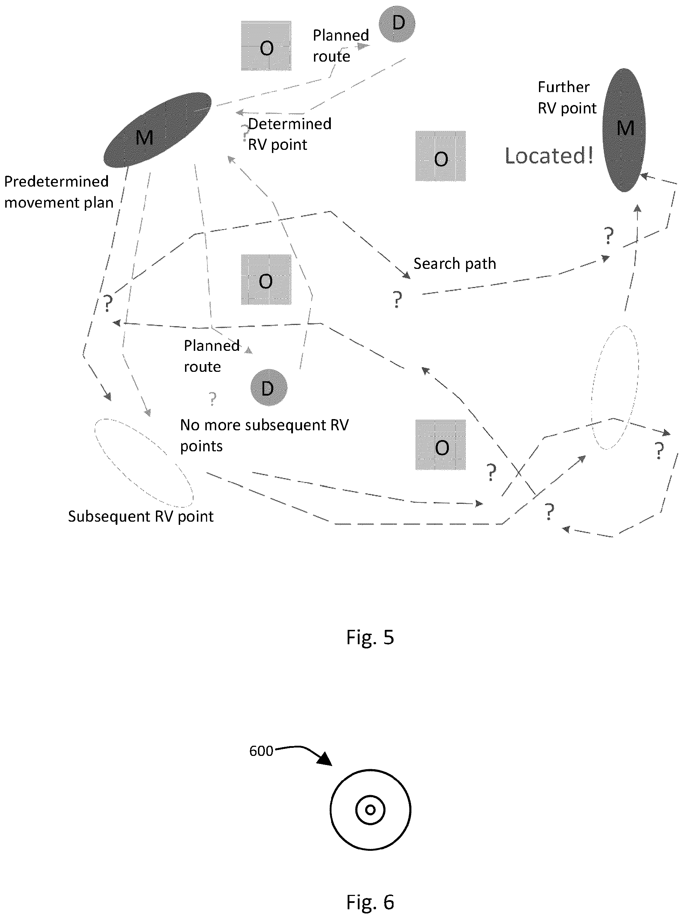

The operation of the children drones in such scenarios will be described in more detail now, with reference to Figures 4 and 5

Figure 4 shows a mothership M in an initial position corresponding to a rendezvous point; the mothership M's predetermined movement plan; four obstacles O; and two drones D that have deployed from the mothership M and followed their planned routes and accomplished their respective set tasks.

In the Figure 4 example, the drones D took autonomous decisions after deployment to avoid the obstacles O, and thus deviated from their originally planned routes. This means, in this example, that rendezvousing with the mothership M at the determined rendezvous point has become impossible, as the mothership M has continued on its own predetermined movement plan. In this example, the drones are not aware of the timing of the mothership's departure from the determined rendezvous point, and this determine to make for this point when they have completed their set tasks. However, on reaching the determined rendezvous point the mothership M is not present, and so the rendezvous condition is determined by the drones as not being met. The drones D determine to follow the path of the mothership M's predetermined movement plan to a subsequent rendezvous point. However, the mothership M has continued from this point along its predetermined movement plan, so again the rendezvous condition is not determined by the drones as being met.

The subsequent rendezvous point was the first of three rendezvous point candidates determined on the mothership's route plan when the originally determined rendezvous point was unsuccessful, and the drones then autonomously navigate to a second subsequent rendezvous point candidate. In Figure 4 the autonomous avoidance of an obstacle O is shown. Again, this candidate rendezvous point is determined by the drones not to meet the rendezvous condition, so the process repeats with the drones going toward the third subsequent rendezvous point. At this location, the drones have caught up with the mothership, and the rendezvous condition is determined by the drones to be met.

Figure 5 shows a similar arrangement to Figure 4, but this time the drones run out of information about the predetermined path of the mothership after reaching the subsequent rendezvous point and finding that there the rendezvous condition is not met. Then, the drones operate themselves to search according to a random search strategy, to attempt to locate the mothership, until reaching the mothership at the further rendezvous point. In the example of Figure 5, one search path is shown for both drones D.

As will be appreciated, the method steps can be embodied as software or hardware instructions, such as in the form of a program of instructions which when executed on a suitable processor cause an associated autonomous vehicle to operate as described. Figure 6 shows a computer-readable recording medium 600 in the form of a disk that stores such instructions.

By use of the methods described herein, autonomous vehicles may be operated independently of a control station, in such a way that allows them an increased chance of subsequently rendezvousing with the control station without the need to communicate with the control station, even in scenarios where the control station has moved, including movement that deviates from a predetermined planned route for the control station.

Attention is directed to all papers and documents which are filed concurrently with or before this specification in connection with this application and which are open to public inspection with this specification, and the contents of all such papers and documents are incorporated herein by reference.

All the features disclosed in this specification (including any accompanying claims, abstract and drawings), and/or all the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent, or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of controlling an autonomous vehicle, the method comprising:
determining a route plan for an autonomous vehicle according to a set task for the autonomous vehicle;
operating the autonomous vehicle according to the route plan;
determining a rendezvous point and operating the autonomous vehicle to go to the rendezvous point; and
on reaching the rendezvous point determining, by the autonomous vehicle, whether a rendezvous condition is met, and if the rendezvous condition is not met determining, by the autonomous vehicle, a subsequent rendezvous point and operating the autonomous vehicle to go to the subsequent rendezvous point.

2. The method of claim 1, further comprising, on reaching the subsequent rendezvous point, determining, by the autonomous vehicle, whether the rendezvous condition is met, and if the rendezvous condition is not met operating the autonomous vehicle to conduct a search for a further rendezvous point.

3. The method of claim 2, wherein the step of operating the autonomous vehicle to conduct a search for a further rendezvous point is performed according to a random search algorithm.

4. The method of claim 2 or claim 3, wherein the step of operating the autonomous vehicle to conduct a search for a further rendezvous point is performed according to a last known location of a control station, the time elapsed since the control station was known to be at its last known location, and the operating parameters of the control station.

5. The method of any one of claims 2 to 4, wherein the step of operating the autonomous vehicle to conduct a search for a further rendezvous point is performed until it is determined that a rendezvous condition is met (218, 220).

6. The method of any preceding claim, wherein the step of determining the rendezvous point is performed according to a predetermined movement plan of a control station.

7. The method of any preceding claim, wherein the step of determining the subsequent rendezvous point is performed according to a predetermined movement plan of a control station.

8. The method of claim 7, wherein the step of determining the subsequent rendezvous point and operating the autonomous vehicle to go to the subsequent rendezvous point comprises determining, according to a predetermined movement plan of the control station, one or more rendezvous point candidates between the current location of the autonomous vehicle and the subsequent rendezvous point, and operating the autonomous vehicle to go to the subsequent rendezvous point via the rendezvous point candidates.

9. The method of any preceding claim, wherein the step of determining the rendezvous point is performed only after the set task has been completed by the autonomous vehicle.

10. The method of any one of claims 1 to 9, wherein the step of determining the rendezvous point is performed as part of determining the route plan for the autonomous vehicle.

11. The method of any preceding claim, wherein the rendezvous condition is determined as being met when the autonomous vehicle has rendezvoused with a control station.

12. The method of any preceding claim, wherein the rendezvous condition is determined as being met when the autonomous vehicle has rendezvoused with another autonomous vehicle operating according to the set task.

13. The method of any preceding claim, comprising operating the autonomous vehicle to deviate from the determined route plan in case of an obstacle encountered on the route plan, and/or determining a route plan that involves an indeterminate operational delay to account for a period of time that will be needed to undertake the set task.

14. An autonomous vehicle arranged configured to perform the method of any one of claims 1 to 13.

15. A control station arranged to carry the autonomous vehicle of claims 14.
